# EUROPEAN PATENT APPLICATION

(11) **EP 2 777 986 A1**
(43) Date of publication of application: **17.09.2014**
(21) Application number: 14158750.1
(22) Date of filing: 11.03.2014
(51) Int. Cl.: B60Q 1/14, B60Q 1/08

(54) **Vehicular headlamp system and control device**

(30) Priority: 12.03.2013 JP 2013049147
(71) Applicant: KOITO MANUFACTURING CO., LTD., Tokyo (JP)
(72) Inventor: Otani, Tomoaki, Shizuoka-shi, Shizuoka (JP)
(74) Representative: Finnie, Peter John

(57) **Abstract**

A vehicular headlamp system is provided which includes: a first optical system (10La) capable of forming in a radiation region thereof a dark portion (41a) extending linearly to a front of a lamp; a second optical system (10Lb) provided at a different position in a lateral direction from the first optical system (10La) and capable of radiating light to the front of the lamp; a front sensor (20) that detects a light shield object A to be shielded from light such as an oncoming vehicle; and a control unit (30) that controls the first optical system (10La) and the second optical system (10Lb) based on a position of the light shield object A so that the first optical system (10La) forms the dark portion on the light shield object A and that the second optical system (10Lb) irradiates regions located on front and rear sides of the light shield object A in the dark portion (41a) with light.

## Description

### Field of the Invention

The present invention relates to vehicular headlamp systems including a plurality of optical systems in a vehicle width direction, and control devices thereof.

### Background to the Invention

Vehicular headlamps capable of changing light distribution to shield only a specific region from light so as not to cause glare to a driver of an oncoming vehicle are known. For example, the vehicular headlamp of Japanese Patent Application Laid-Open (Kokai) No. 2009-218155 emits light from a plurality of LEDs to project their respective images to the front of the lamp, and turns off the LED that forms an image in a portion where an oncoming vehicle is present, thereby enhancing visibility ahead of the vehicle without causing glare to the oncoming vehicle.

However, the entire linear region connecting the vehicular headlamp and the oncoming vehicle is dark in such a vehicular headlamp of a Japanese Patent Application Laid-Open (Kokai) No. 2009-218155. The vehicular headlamp therefore cannot irradiate with light a road surface, a road sign, etc. that are included in the linear region, and has reduced visibility.

### Summary of the Invention

It is an object of the present invention to provide a vehicular headlamp system achieving enhanced visibility with suppressed glare to a pedestrian, a driver of an oncoming vehicle, etc. and a control device of a vehicular headlamp.

A vehicular headlamp system of the present invention which is capable of solving the above problem includes: a first optical system capable of forming in a radiation region thereof a dark portion extending linearly to a front of a lamp; a second optical system provided at a different position in a lateral direction from the first optical system and capable of radiating light to the front of the lamp; a front sensor that detects a position of a light shield object to be shielded from light such as an oncoming vehicle; and a control unit that controls the first optical system and the second optical system in response to detection of the light shield object by the front sensor so that the dark portion is formed on the light shield object by the first optical system and that the second optical system irradiates regions located on front and rear sides of the light shield object in the dark portion with light.

Since the regions located on the front and rear sides of the light shield object in the linear dark portion formed by the first optical system are irradiated with light by the second optical system, good forward visibility is achieved. Moreover, since the first optical system forms the dark portion on the light shield object, glare to the oncoming vehicle etc. can be suppressed.

In the vehicular headlamp system according to the present invention, the second optical system may also be capable of forming in a radiation region thereof a dark portion extending linearly to the front of the lamp, and the control unit may control the first optical system and the second optical system so that the dark portions overlap each other on the light shield object.

In the vehicular headlamp system according to the present invention, at least one third optical system may be provided between the first optical system and the second optical system in the lateral direction.

Since the first optical system is separated from the second optical system in the lateral direction, the overlapping region of the dark portions can be reduced. This can further enhance visibility.

In the vehicular headlamp system according to the present invention, at least one third optical system may be provided between the first optical system and the second optical system in the lateral direction, the second optical system and the third optical system may also be capable of forming in a radiation region thereof a dark portion extending linearly to the front of the lamp, and the first optical system, the second optical system, and the third optical system may be provided in each of a plurality of the lamps provided on a left front part and a right front part of a vehicle.

Combining the plurality of dark portions that are formed by the optical systems provided at different positions in the lateral direction can reduce the overlapping region of the dark portions, whereby visibility can be enhanced.

A control device of a vehicular headlamp of the present invention which is capable of solving the above problem is a control device that controls a vehicular headlamp including a first optical system capable of forming in a radiation region thereof a dark portion extending linearly to a front of the lamp, and a second optical system provided at a different position in a lateral direction from the first optical system and capable of radiating light to the front of the lamp, wherein the control device controls the first optical system and the second optical system so that the dark portion is formed on a light shield object to be shielded from light such as an oncoming vehicle by the first optical system based on a distance to the light shield object and a position of the light shield object and that the second optical system irradiates regions located on front and rear sides of the light shield object in the dark portion with light.

Since the regions located on the front and rear sides of the light shield object in the linear dark portion formed by the first optical system are irradiated with light by the second optical system, good forward visibility is achieved. Moreover, since the first optical system forms the dark portion on the light shield object, glare to the oncoming vehicle etc. can be suppressed.

### Brief Description of the Drawings

[FIG. 1] FIG. 1 is an overall configuration diagram of a vehicular headlamp system according to an embodiment of the present invention.
[FIG. 2] FIG. 2 is a cross-sectional view of a left outer optical system.
[FIG. 3] FIG. 3 shows diagrams showing a radiation region formed by each optical system.
[FIG. 4] FIG. 4 is a diagram showing the state where dark portions formed by the optical systems overlap each other.

### Detailed Description

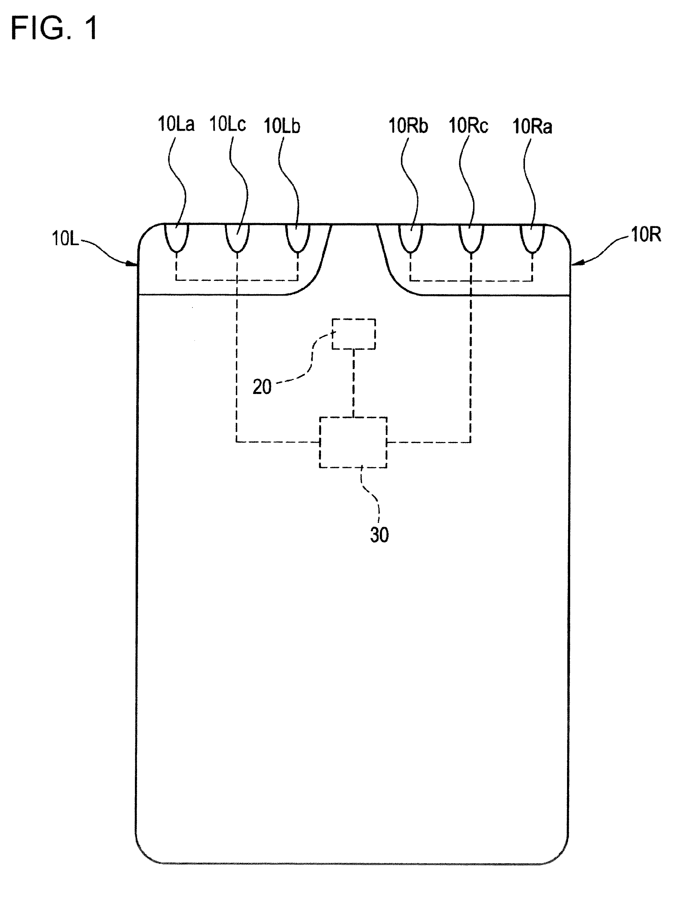

A vehicle having applied thereto a vehicular headlamp system according to an embodiment of the present invention will be described in detail below with reference to the accompanying drawings. FIG. 1 is an overall configuration diagram of the vehicular headlamp system according to the present embodiment.

The vehicular headlamp system according to the present embodiment includes a left headlamp 10L, a right headlamp 10R, a front sensor 20, and an ECU 30.

The left headlamp 10L is provided in a left front part of the vehicle as viewed from the driver, and the right headlamp 10R is provided in a right front part of the vehicle as viewed from the driver. In the following description, each of the left headlamp 10L and the right headlamp 10R is also referred to as the headlamp 10 when it is not necessary to distinguish between the left headlamp 10L and the right headlamp 10R.

Each of the headlamps 10 includes three optical systems provided at different positions in a lateral direction. In the following description, regarding the optical systems provided in the left headlamp 10L, the optical system located at the outermost position in the vehicle in a vehicle width direction is referred to as the left outer optical system 10La, the optical system located at the innermost position in the vehicle in the vehicle width direction is referred to as the left inner optical system 10Lb, and the optical system located at an intermediate position therebetween is referred to as the left intermediate optical system 10Lc. Regarding the optical systems provided in the right headlamp 10R, the optical system located at the outermost position in the vehicle in the vehicle width direction is referred to as the right outer optical system 10Ra, the optical system located at the innermost position in the vehicle in the vehicle width direction is referred to as the right inner optical system 10Rb, and the optical system located at an intermediate position therebetween is referred to as the right intermediate optical system 10Rc.

The front sensor 20 is mounted on the vehicle. The front sensor 20 detects the presence and position of a light shield object to be shielded from light such as an oncoming vehicle approaching the host vehicle, a vehicle traveling ahead of the host vehicle in the same direction as the host vehicle, or a pedestrian. A camera, an infrared sensor, a millimeter-wave radar, etc. can be used as the front sensor.

The electronic control unit (ECU) (control unit, control device) 30 is mounted on the vehicle. The ECU 30 is electrically connected to the left headlamp 10L, the right headlamp 10R, and the front sensor 20. The ECU 30 transmits a control signal to the headlamps 10 according to the output of the front sensor 20.

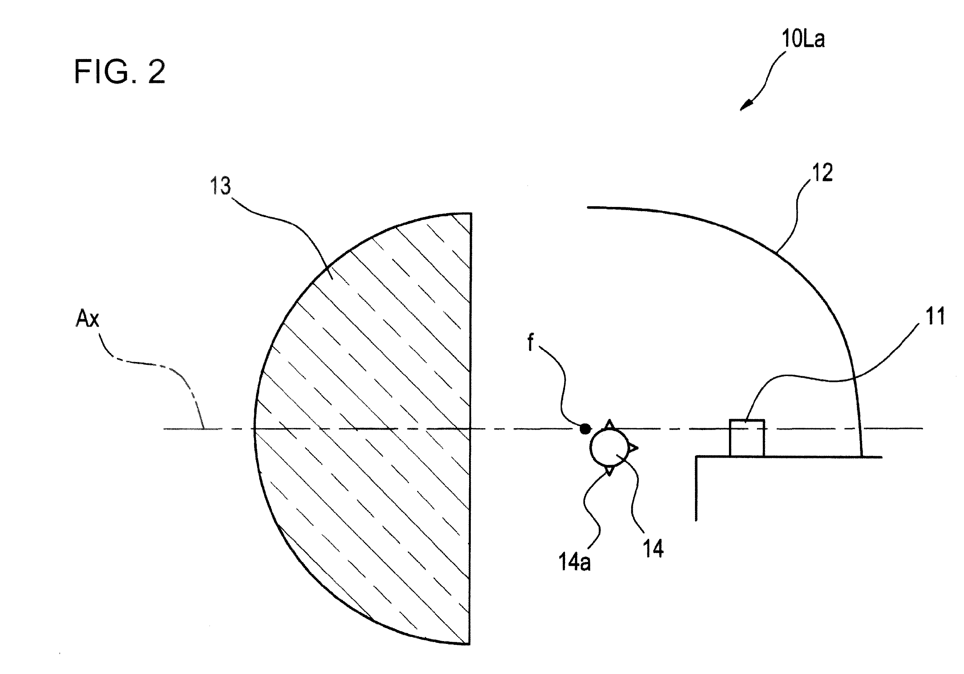

Since the left headlamp 10L and the right headlamp 10R are similar to each other in configuration and the plurality of optical systems are similar to each other in configuration, the left outer optical system 10La of the left headlamp 10L will be representatively described. FIG. 2 is a lateral cross-sectional view of the left outer optical system 10La.

The left outer optical system 10La includes a light source 11, a reflector 12 that reflects light from the light source 11 to the front of the lamp, and a projection lens 13 having an optical axis Ax extending in a longitudinal direction of the lamp. The projection lens 13 projects direct light from the light source 11 and reflected light from the reflector 12 to the front of the lamp. The left outer optical system 10La thus forms in front of the lamp a radiation region to which light is radiated.

The left outer optical system 10La includes a rotary shade 14 having an axis of rotation which crosses the optical axis Ax of the projection lens 13. The rotary shade 14 is placed so that its outer peripheral surface is located in the proximity of a rear focal point f of the projection lens 13.

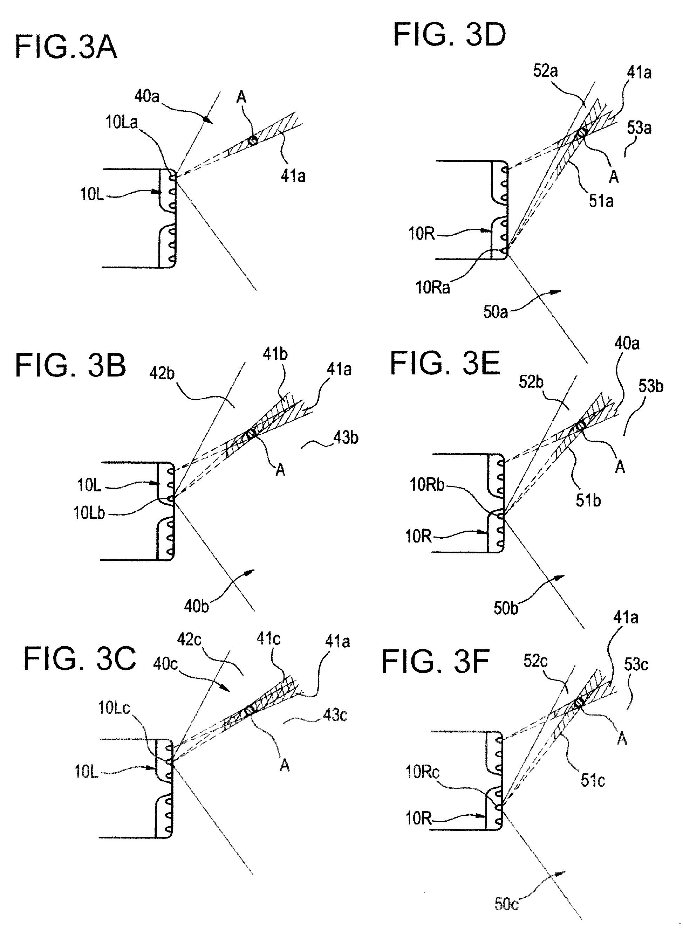

A plurality of protruding portions 14a are formed on the outer peripheral surface of the rotary shade 14 along a circumferential direction. The protruding portions 14a are formed so as to protrude in a radial direction of the rotary shade. The protruding portions 14a block part of light that is incident on the projection lens 13, thereby forming in the radiation region a dark portion extending linearly forward from the lamp (see FIG. 3). The plurality of protruding portions 14a are formed at different positions in a direction of the axis of rotation of the rotary shade 14. A region where the dark portion is to be formed in the radiation region can therefore be changed by rotating the rotary shade 14.

Operation of the vehicular headlamp system according to the present embodiment will be described below. FIG. 3 shows diagrams showing the radiation region formed by each optical system of the headlamps 10 as viewed from above the vehicle.

The operation of the vehicular headlamp system according to the present embodiment will be described with respect to the case where a light shield object A is present ahead of the vehicle as shown in FIG. 3. In response to detection of the light shield object A by the front sensor 20, the ECU 30 transmits a control signal to the headlamps 10 to control the headlamps 10, based on the position of the light shield object A.

Based on the position of the light shield object A, the ECU 30 rotates the rotary shade 14 of the left outer optical system 10La located at the outermost position in the vehicle width direction in the left headlamp 10L, so as to position a specific one of the protruding portions 14a in the proximity of the rear focal point f of the projection lens 13. A dark portion 41a extending linearly forward is thus formed on the light shield object A in a radiation region 40a formed by the outer optical system 10a of the left headlamp 10L, as shown in FIG. 3(a).

The ECU 30 also rotates the rotary shade 14 of the left inner optical system 10Lb of the left headlamp 10L based on the position of the light shield object A so as to position a specific one of the protruding portions 14a in the proximity of the rear focal point f of the projection lens 13. The left inner optical system 10Lb of the left headlamp 10L thus forms such a radiation region 40b as shown in FIG. 3(b). In the radiation region 40b, a dark portion 41b is formed on the light shield object A, and a region 42b on the rear side of the light shield object A and a region 43b on the front side of the light shield object A are irradiated with light.

As used herein, the rear side of the light shield object A refers to the side of the linear dark portion 41a formed on the light shield object A by the left outer optical system 10La of the left headlamp 10L, which is located closer to the vehicle with respect to the light shield object A. The front side of the light shield object A refers to the side of the linear dark portion 41a formed on the light shield object A, which is located farther from the vehicle with respect to the light shield object A.

Regions shown by broken lines in FIG. 3 represent imaginary dark portions that are not formed actually. These regions shown by broken lines are shown in order to clarify which dark portion is formed by which optical system.

Moreover, the ECU 30 rotates the rotary shade 14 of the left intermediate optical system 10Lc of the left headlamp 10L based on the position of the light shield object A so as to position a specific one of the protruding portions 14a in the proximity of the rear focal point f of the projection lens 13. The left intermediate optical system 10Lc of the left headlamp 10L thus forms such a radiation region 40c as shown in FIG. 3(c). In the radiation region 40c, a dark portion 41c is formed on the light shield object A, and a region 42c on the rear side of the light shield object A and a region 43c on the front side of the light shield object A are irradiated with light.

On the other hand, regarding the right headlamp 10R, the ECU 30 rotates the rotary shade 14 of the right outer optical system 10Ra of the right headlamp 10R based on the position of the light shield object A so as to position a specific one of the protruding portions 14a in the proximity of the rear focal point f of the projection lens 13. The right outer optical system 10Ra of the right headlamp 10R thus forms such a radiation region 50a as shown in FIG. 3(d). In the radiation region 50a, a dark portion 51a is formed on the light shield object A, and a region 52a on the rear side of the light shield object A and a region 53a on the rear side of the light shield object A are irradiated with light.

The ECU 30 also rotates the rotary shade 14 of the right inner optical system 10Rb of the right headlamp 10R based on the position of the light shield object A so as to position a specific one of the protruding portions 14a in the proximity of the rear focal point f of the projection lens 13. The right inner optical system 10Rb of the right headlamp 10R thus forms such a radiation region 50b as shown in FIG. 3(e). In the radiation region 50b, a dark portion 51b is formed on the light shield object A, and a region 52b on the rear side of the light shield object A and a region 53b on the front side of the light shield object A are irradiated with light.

Moreover, the ECU 30 rotates the rotary shade 14 of the right intermediate optical system 10Rc of the right headlamp 10R based on the position of the light shield object A so as to position a specific one of the protruding portions 14a in the proximity of the rear focal point f of the projection lens 13. The right intermediate optical system 10Rc of the right headlamp 10R thus forms such a radiation region 50c as shown in FIG. 3(f). In the radiation region 50c, a dark portion 51c is formed on the light shield object A, and a region 52c on the rear side of the light shield object A and a region 53c on the front side of the light shield object A are irradiated with light.

If the front sensor 20 detects that there is no light shield object ahead of the vehicle, the ECU 30 controls the rotary shade 14 of each optical system of the left headlamp 10L and the right headlamp 10R so that a part of the rotary shade 14 where no protruding portion 14a is formed is located in the proximity of the rear focal point f of the projection lens 13. The ECU 30 thus forms in front of the lamp a radiation region where no dark portion is formed, maximizing visibility in front of the lamp.

As described above, according to the vehicular headlamp system of the present embodiment, the linear dark portion 41a that is formed by the left outer optical system 10La (first optical system) of the left headlamp 10L is formed on the light shield object A. Accordingly, at least the left outer optical system 10La (first optical system) does not irradiate the light shield object A with light and can suppress glare to an oncoming vehicle.

Moreover, the regions on the front and rear sides of the linear dark portion 41a that is formed by the left outer optical system 10La (first optical system) of the left headlamp 10L are irradiated with light by the left inner optical system 10Lb and the left intermediate optical system 10Lc of the left headlamp 10L and the right outer optical system 10Ra, the right inner optical system 10Rb, and the right intermediate optical system 10Rc (second optical system) of the right headlamp 10R. The regions on the sides of the light shield object A which are located closer to or farther from the vehicle are thus irradiated with light, and visibility ahead of the vehicle can be enhanced.

The vehicular headlamp system according to the present embodiment includes the optical systems each capable of forming a dark portion in a radiation region, and the ECU 30 controls the optical systems so that the respective dark portions are formed on the light shield object A so as to overlap each other. This can reliably prevent glare to the light shield object A.

Moreover, in the vehicular headlamp system according to the present embodiment, the left outer optical system 10La (first optical system) and the left inner optical system 10Lb (second optical system) are positioned so as to interpose the left intermediate optical system 10Lc (third optical system) therebetween in the lateral direction. That is, the left outer optical system 10La and the left inner optical system 10Lb are designed to have a large separation distance therebetween in the lateral direction.

Thus, as shown in FIGS. 3(b) and 3(c), the left inner optical system 10Lb can radiate light at a larger angle with respect to the linear dark portion 41a formed by the left outer optical system 10La as compared to the left intermediate optical system 10Lc. Thus, as compared to a vehicular headlamp system formed by only the left outer optical system La and the left intermediate optical system Lc, a vehicular headlamp system formed by using the left outer optical system La and the left inner optical system Lb can efficiently irradiate a region other than the light shield object A of the linear dark portion 41a with light, and can efficiently enhance forward visibility.

Furthermore, in the present embodiment, the left headlamp 10L includes the left outer optical system 10La (first optical system), the left inner optical system 10Lb (second optical system), and the left intermediate optical system 10Lc (third optical system) provided therebetween in the lateral direction. Similarly, the right headlamp 10R includes the right outer optical system 10Ra (first optical system), the right inner optical system 10Rb (second optical system), and the right intermediate optical system 10Rc (third optical system) provided therebetween in the left-right direction.

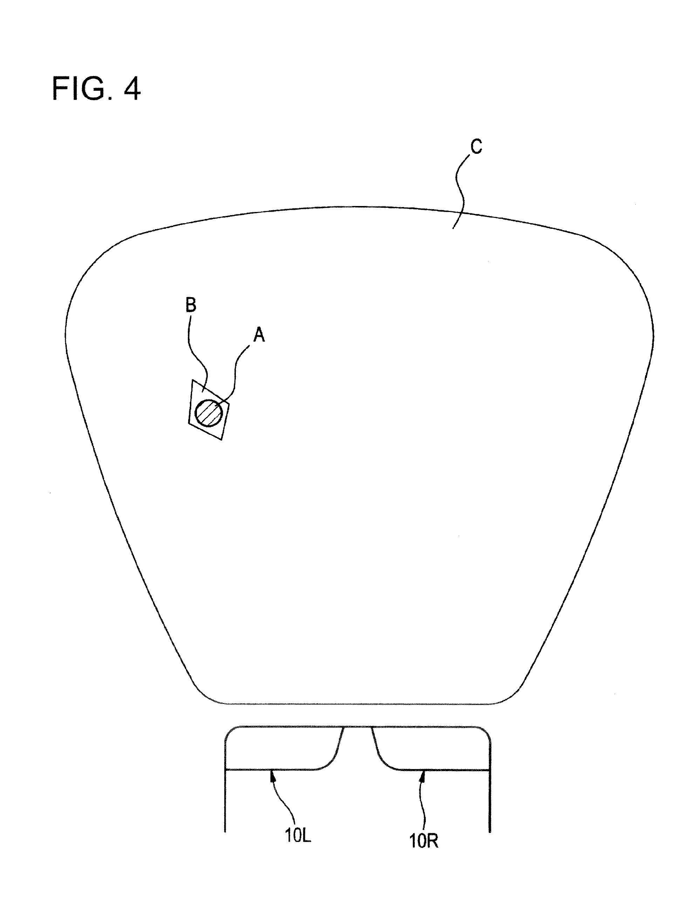

Thus combining the plurality of optical systems each capable of forming a dark portion extending linearly to the front of the lamp can reduce an overlapping region of their respective dark portions as much as possible. FIG. 4 is a diagram showing the state where the dark portions formed by the plurality of optical systems overlap each other. Combining a plurality of dark portions extending linearly from a plurality of different positions in the lateral direction can make the dark portions overlap each other on the light shield object A in a radiation region C while reducing the size of an overlapping region B of the dark portions. This can implement good forward visibility while preventing glare.

The vehicular headlamp system and the control device according to the present invention are not limited to the above embodiment, and can be modified, improved, etc. as appropriate.

The above embodiment is described with respect to an example in which the left outer optical system 10La (first optical system) forming the linear dark portion 41a and the other optical systems 10Lb, 10Lc, 10Ra, 10Rb, 10Rc (second optical system) each forming a linear dark portion are combined to enhance forward visibility while glare is suppressed as described above. However, the present invention is not limited to this example.

For example, as the second optical system, the left inner optical system 10Lb may be formed by an optical system that does not include the rotary shade 14 and that has such low illuminance as not to cause glare to an oncoming vehicle etc. This left inner optical system 10Lb may be configured to irradiate with light a region including the regions on the front and rear sides of the dark portion 41a that includes the light shield object A and is formed by the left outer optical system 10La as the first optical system. In this case, the radiation region of the front inner optical system 10Lb is fixed, and the ECU 30 controls only the left outer optical system 10La according to the position of the light shield object A. This can reduce a control load.

The above embodiment is described with respect to an example in which the vehicular headlamp system is formed by using all the optical systems provided in the headlamps 10. However, the present invention is not limited to this, and only two specific optical systems may be used. In the case where the vehicular headlamp system is formed by only two specific optical systems, it is preferable to use those two optical systems which are greatly separated from each other in the lateral direction, and it is preferable to use the left outer optical system 10La of the left headlamp 10L and the right outer optical system 10Ra of the right headlamp 10R which are located at both ends in the vehicle width direction.

In the description of the above embodiment, the left outer optical system 10La is described as the first optical system. However, any of the other optical systems 10Lb, 10Lc, 10Ra, 10Rb, and 10Rc may be used as the first optical system.

Moreover, the above embodiment is described with respect to the optical system that forms a dark portion in a radiation region by blocking part of light from the light source 11 by the protruding portion 14a of the rotary shade 14. However, the present invention is not limited to this example.

For example, an optical system may be used which includes a reflector having a plurality of reflective surfaces capable of being individually controlled and which forms a dark portion in a radiation region by controlling the reflection angles of the reflective surfaces. By controlling the reflective surfaces, the ECU 30 controls the radiation region so that forward visibility is enhanced while glare is suppressed as described above.

Alternatively, an optical system may be used which includes a plurality of light sources each capable of irradiating a specific region in a radiation region with light and capable of being individually controlled. Such an optical system can form a dark portion at a specific position in the radiation region by turning off a specific one of the light sources. By controlling the light sources, the ECU 30 controls the radiation region so that forward visibility is enhanced while glare is suppressed as described above.

The above embodiment is described with respect to an example in which a vehicular headlamp system is formed by using an optical system that always forms a radiation region at the same position and that moves the position of a dark portion within the radiation region. However, the present invention is not limited to this. For example, an optical system can be used which includes a movable shade capable of being moved to a light-shielding position and a non-light-shielding position to form a dark portion in a radiation region, and a reflector supported so as to be able to turn in a horizontal direction. In this case, the ECU 30 controls the position of the movable shade and the orientation of the reflector in the horizontal direction to control the radiation region so that forward visibility is enhanced while glare is suppressed as described above.

In the above embodiment, the region formed by blocking part of light by the protruding portion 14a of the rotary shade 14 is described as the dark portion. However, in the present invention, the dark portion is not intended to refer to a region that is not at all irradiated with light, but means a region having lower illuminance than the remaining part of the radiation region.

For example, in the case where an optical system is used which includes a plurality of light sources capable of being individually controlled and which forms a dark portion in a specific part of a radiation region by controlling the light sources, the dark portion can be a region that is formed by reducing illuminance of a specific one of the light sources and that is darker than the remaining part of the radiation region.

Moreover, the above embodiment is described with respect to the case where a single light shield object has been detected ahead of the vehicle. However, the present invention is applicable to the case where a plurality of light shield objects have been detected which are separated from each other in the lateral direction. In this case, for example, the dark portion 41a of the left outer optical system 10La and the dark portion 51b of the right inner optical system 10Rb can be made to overlap each other on a first light shield object A1, the dark portion 41c of the left intermediate optical system 10Lc and the dark portion 51c of the right intermediate optical system 10Rc can be made to overlap each other on a second light shield object A2, and the dark portion 41b of the left inner optical system 10Lb and the dark portion 51a of the right outer optical system 10Ra can be made to overlap each other on a third light shield object A3.

The present invention is described with respect to an example in which the front sensor and the control unit are mounted on the vehicle. However, the front sensor and the control unit may be mounted on the lamp.

## Claims

1. A vehicular headlamp system, comprising:
a first optical system capable of forming in a radiation region thereof a dark portion extending linearly to a front of a lamp;
a second optical system provided at a different position in a lateral direction from the first optical system and capable of radiating light to the front of the lamp;
a front sensor that detects a light shield object to be shielded from light such as an oncoming vehicle; and
a control unit that controls the first optical system and the second optical system based on a position of the light shield object so that the dark portion is formed on the light shield object by the first optical system and that the second optical system irradiates regions located on front and rear sides of the light shield object in the dark portion with light.

2. The vehicular headlamp system according to claim 1, wherein
the second optical system is also capable of forming in a radiation region thereof a dark portion extending linearly to the front of the lamp, and
the control unit controls the first optical system and the second optical system so that the dark portions overlap each other on the light shield object.

3. The vehicular headlamp system according to claim 1 or 2, wherein
at least one third optical system is provided between the first optical system and the second optical system in the lateral direction.

4. The vehicular headlamp system according to any preceding claim, wherein
at least one third optical system is provided between the first optical system and the second optical system in the lateral direction,
the second optical system and the third optical system are also capable of forming in a radiation region thereof a dark portion extending linearly to the front of the lamp, and
the first optical system, the second optical system, and the third optical system are provided in each of a plurality of the lamps provided on a left front part and a right front part of a vehicle.

5. A control device of a vehicular headlamp which controls the vehicular headlamp including a first optical system capable of forming in a radiation region thereof a dark portion extending linearly to a front of the lamp, and a second optical system provided at a different position in a lateral direction from the first optical system and capable of radiating light to the front of the lamp, wherein
the control device controls the first optical system and the second optical system so that the dark portion is formed on a light shield object to be shielded from light such as an oncoming vehicle by the first optical system based on a position of the light shield object and that the second optical system irradiates regions located on front and rear sides of the light shield object in the dark portion with light.
